# EUROPEAN PATENT SPECIFICATION

(11) **EP 4 122 757 B1**
(45) Date of publication and mention of the grant of the patent: **17.04.2024**
(21) Application number: 21206862.1
(22) Date of filing: 08.11.2021
(51) Int. Cl.: B60N 2/66

(54) **LUMBAR SUPPORT ASSEMBLY**
LENDENWIRBELSTÜTZANORDNUNG
ENSEMBLE SUPPORT LOMBAIRE

(30) Priority: 23.07.2021 KR 20210097023
(43) Date of publication of application: 25.01.2023
(73) Proprietor: Daechang Seat Co., Ltd.-Dongtan, Hwaseong-si, Gyeonggi-do 18487 (KR)
(72) Inventor: CHO, Chan Ki, 25305 Pyeongchang-gun, Gangwon-do (KR); PARK, Gun Young, 22858 Seo-gu, Incheon (KR); KIM, Jin Oh, 18148 Osan-si, Gyeonggi-do (KR); PARK, Jun Kyu, 18431 Hwaseong-si, Gyeonggi-do (KR); SEO, Kang Seok, 18487 Hwaseong-si, Gyeonggi-do (KR)
(74) Representative: Zimmermann, Tankred Klaus

(56) References cited:
- WO-A1-2016/122439
- US-A1- 2010 268 133

## Description

### BACKGROUND OF THE INVENTION

### Field of the Invention

The present invention relates to a lumbar support assembly and, more particularly, to a lumbar support assembly combined with a seat frame of a vehicle and supporting a user's upper body.

### Description of the Related Art

Unless otherwise stated in the present specification, the matter described under this section should not be used as prior art against the claimed invention, and the description under this section is not an admission of prior art.

A seat cushion supporting an occupant's upper body, a seat back supporting an occupant's back, an armrest supporting an occupant's arm, and a headrest supporting an occupant's head may be mounted on a seat. A shape of the seat may be adjusted suitably for an occupant under the control of the occupant.

In the related art, a lumbar support assembly supporting the occupant's back has been under development for seat positioning suitable for an occupant's body. Along with this development, research has been conducted on reduction of a weight of the lumbar support assembly for fuel efficiency required of an electric vehicle.

In this connection, Korean Patent No.10-2057461 discloses a lumbar support assembly, and Korean Patent No.10-2259893 discloses a lumbar support apparatus.

These patented inventions have a limitation in reducing the weight of the lumbar support assembly and are not directed to a method of reducing the weight of the lumbar support assembly and at the same time improving the convenience of manufacturing the lumbar support assembly.

The foregoing is intended merely to aid in the understanding of the background of the present disclosure, and is not intended to mean that the present disclosure falls within the purview of the related art that is already known to those skilled in the art.

US 2010/268133 A1 teaches a support assembly having a first support region with adjustable degree of support and a second support region with adjustable degree of support for use in a seat structure. The support assembly comprises a support member for incorporation into a seat frame, a first adjustment arrangement for adjusting the degree of support in the first support region, and a second adjustment arrangement for adjusting the degree of support in the second support region. The support assembly further comprises an actuator coupled to the first adjustment arrangement and to the second adjustment arrangement. By Bowden cables, the actuator being configured to simultaneously act on the first adjustment arrangement and on the second adjustment arrangement in opposite directions, and a wire-length control mechanism to avoid problems due to a lack of tension of one of the Bowden cables is provided.

### Document of Related Art

(Patent Document 1) Korean Patent No.10-2057461
(Patent Document 2) Korean Patent No.10-2259893

### SUMMARY OF THE INVENTION

An objective of the present invention is to provide a lumbar support assembly including vertical frames holding in place wires connected in an intersecting manner, the vertical frames being manufactured by injection molding. With this structure, a weight of the lumbar support assembly and a manufacturing cost thereof can be decreased.

In addition, the present invention is not limited to the above-described objective, and it is apparent that another objective may be derived from the following description.

According to an aspect of the present invention, there is provided a lumbar support assembly including: a mat formed by connecting wires in such a manner as to take shape in the form of a net and connected to a seat frame in such a manner as to be rotatable forward or backward; a tension unit including first and second cables, respective first end portions of the first and second cable being connected to opposite sides, respectively, of the seat frame, and respective second end portions thereof extending to the mat; and a drive unit mounted on a center lower portion of the mat and connected to the respective second end portions of the first and second end portions, the drive unit being configured to pull or release the first and second cables. The lumbar support assembly further includes a mounting clip unit, a first end portion of the mounting clip unit being formed to a shape of a cylinder that extends toward opposite lateral sides and being combined with the mat, and a second end portion thereof being formed in such a manner that opposite end parts of the first end portion protrude backward and are combined in a hooked manner with the drive unit.

In the lumbar support assembly, the mat may include: vertical frames spaced apart from a first lateral side to a second lateral side; vertical wires inserted into the vertical frames, respectively; and horizontal wires, each intersecting the vertical frames and combined with the vertical wires.

In the lumbar support assembly, first lateral side and second lateral side portions of each of the horizontal wires may be formed in such a manner to be bent in the shape of a hook and to be inserted into the vertical frames while surrounding the vertical wires.

In the lumbar support system, the tension unit may include: a connection hook, a first end portion of the connection hook being pressed in a state where the respective first end portions of the first and second cables are inserted in the first end portion and being combined with the first and second cables, and a second end portion thereof extending in the shape of a hook; and a multi-step hook combined in a hooked manner with the seat frame, and configured to allow the second end portion of the connection hook to be inserted into the multi-step hook, with a plurality of hooking protrusions being provided on an external surface of the multi-step hook in such a manner as to be spaced apart along an extension direction thereof.

According to an embodiment of the present invention, in the lumbar support assembly, some of the vertical wires of the mat pass through an upper portion of the seat frame and are combined with the seat frame. This structure provides the advantage that an existing spring is unnecessary and that a weight of the lumbar support assembly and a manufacturing cost of the lumbar support assembly are decreased.

In addition, in the lumbar support assembly, the vertical and vertical wires in the shape of a net that constitute the mat are combined with each other by injection molding. This structure provides the advantage that the convenience of manufacturing the lumbar support assembly is improved and that a weight of the lumbar support assembly is decreased.

In addition, in the lumbar support assembly, opposite end portions of the horizontal wire are held in place by sealing members manufactured by the injection molding in a state where the opposite end portions thereof are formed in the shape of a hook and are combined with the vertical wires. This structure provides the advantage that the durability of the lumbar support assembly is improved.

In addition, in the lumbar support assembly, the drive unit is combined with the center lower portion of the mat. This structure provides the advantage that left-side and right-side weights of the mat are stably balanced and that the drive unit is firmly combined with the mat by four clips included in the mounting clip unit that are combined by the injection molding.

In addition, the first and second cables formed on the tension unit is combined stably and conveniently with the seat frame through the connection hook and the multi-hook in a different manner than in a cable fixation structure of an existing lumbar support assembly. This structure provides the advantage that the convenience of manufacturing the lumbar support assembly is improved and that the weight of the lumbar support assembly is decreased.

The above-described advantages of the present invention are exemplary and do not include all advantages inherent from configurations of constituent elements.

In addition, an additional advantage of the present invention would be derived from the following description in the present specification. Therefore, such an advantage, if apparent to a person of ordinary skill in the art to which the present disclosure pertains, should be construed as being described in the present specification.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a view illustrating a state where a lumbar support assembly according to an embodiment of the present disclosure is used;
FIG. 2 is a front view illustrating the lumbar support assembly in FIG. 1;
FIG. 3 is an exploded perspective view illustrating the lumbar support assembly in FIG. 1;
FIG. 4 is a cross-sectional view taken along line I-I' on the lumbar support assembly in FIG. 1;
FIG. 5 is an exploded perspective view illustrating the lumbar support assembly in FIG. 1; and
FIGS. 6A and 6B are perspective views each illustrating that the lumbar support assembly in FIG. 1 drives.

### DETAILED DESCRIPTION OF THE INVENTION

A configuration, operation, and an advantageous effect of a lumbar support assembly according to a desired embodiment of the present invention will be described below with reference to the accompanying drawings. For purposes of convenience and clarity, a constituent element may be omitted from the drawings or is schematically illustrated in the drawings. A constituent element is not illustrated at actual size. The same constituent element is designated by the same reference character throughout the specification. Reference characters that depict the same constituent element are not repeated in the drawing.

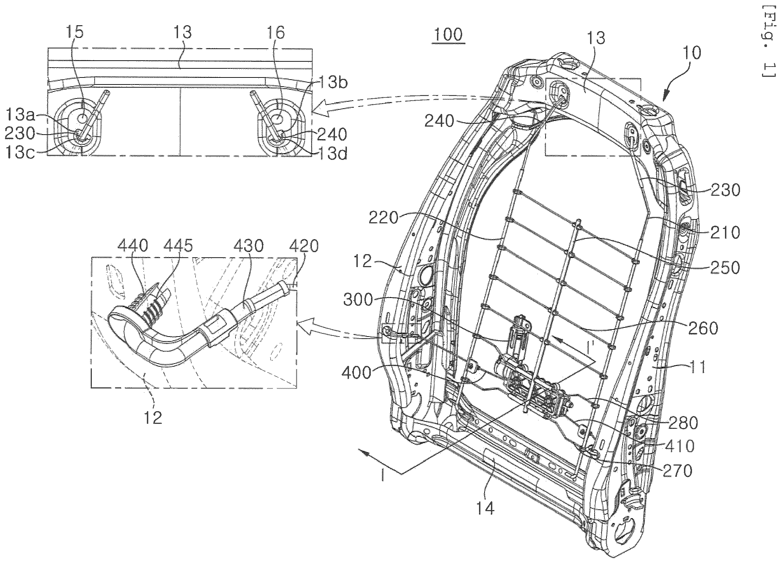

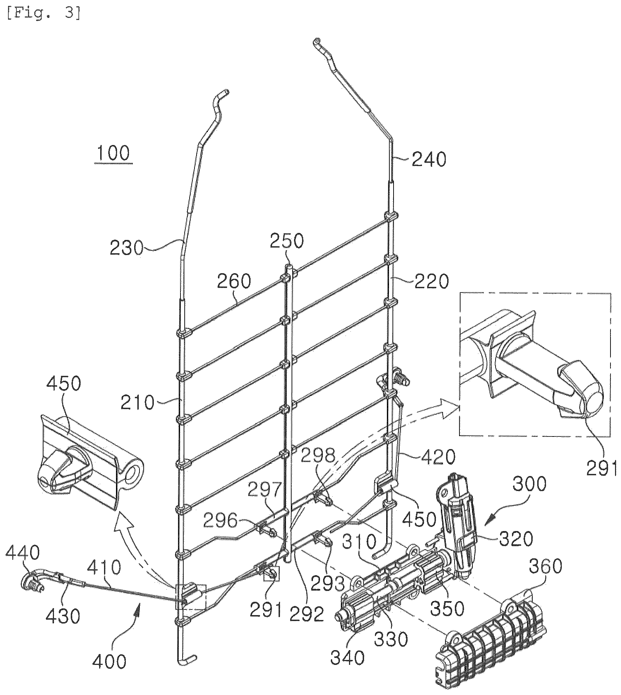

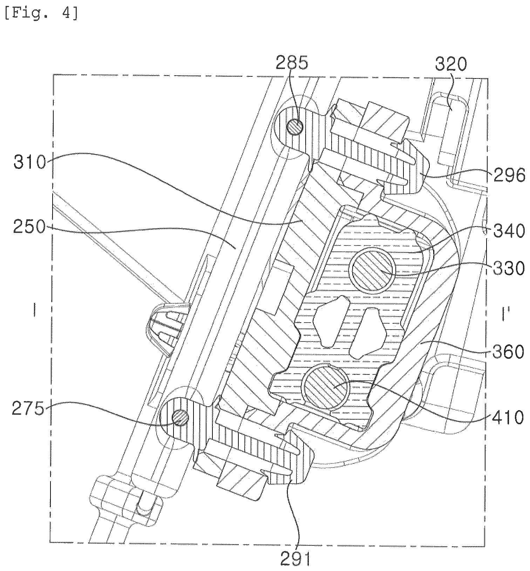

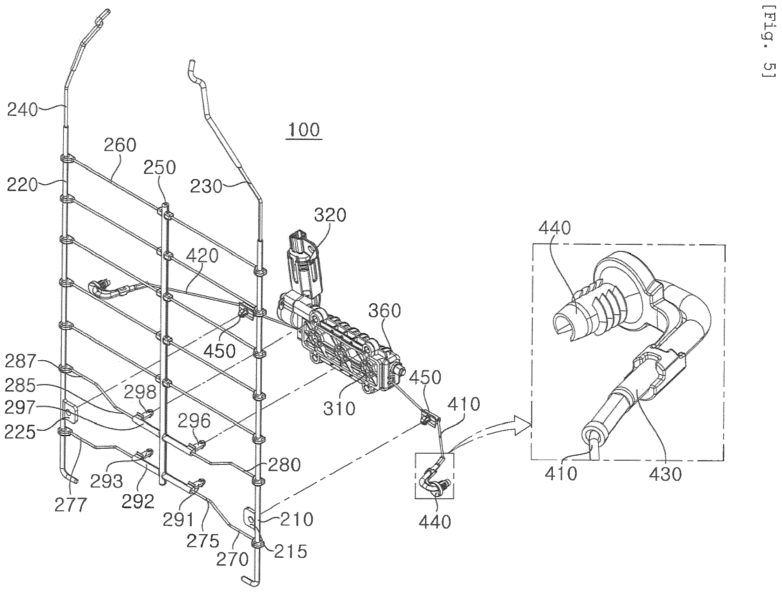

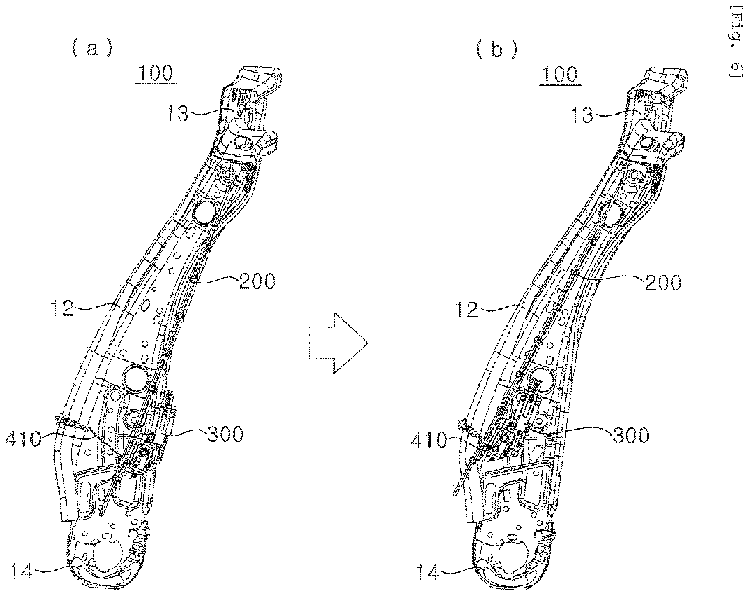

As illustrated in FIGS. 1 to 6B, a lumbar support assembly 100 includes a mat 200, a drive unit 300, and a tension unit 400.

The lumbar support assembly 100 has a small weight because the number of components constituting the drive unit 300, and volumes and weights thereof are decreased. The lumbar support assembly 100 controls a forward or backward movement of a lower portion of the mat 200, and thus comfortably supports the upper bodies of occupants who have various types of bodies.

A seat frame 10 includes a first lateral-side frame 11, a second lateral-side frame 12, an upper frame 13, and a lower frame 14.

Upper holes 13a and 13b passing through the upper frame 13 are formed in a first lateral side and a second lateral side, respectively, of the upper frame 13. Each of upper holes 13a and 13b is formed by connecting relatively small holes positioned to both sides of a central circular hole in such a manner as to form the shape of a cross.

The small holes positioned inside of the upper frame 13 are positioned more downward than those positioned outside of the upper frame 13. In a case where first and second vertical wires 230 and 240 are rotated, the small holes provide sufficient spaces so that stable rotations of the first and second vertical wires 230 and 240, respectively, are possible.

Semi-circular portions, respectively, of the upper frame 13 that correspond to respective lower portions of the upper holes 13a and 13b protrude backward to form reinforced rib 13c and 13d. The reinforced rib 13c and 13d prevent damage to the upper frame 13 while the first and second vertical wires 230 and 240, respectively, are rotated.

Auxiliary holes 15 and 16 are formed in such a manner as to pass through portions, respectively, of a rear surface of the upper frame 13 that are positioned a distance away from respective upper portions of the upper holes 13a and 13b. Instead of the upper holes 13a and 13b, the auxiliary holes 15 and 16 are used to fix the first and second vertical wires 230 and 240, respectively.

In a case where the first and second vertical wires 230 and 240 are combined with the upper frame 13 through the auxiliary holes 15 and 16, respectively, an upper end portion of the mat 200 itself may be moved forward, and thus, the auxiliary holes 15 and 16 may be used suitably for a type of occupant's body. In a case where the upper holes 13a and 14b are damaged, the auxiliary holes 15 and 16 may be used as substitutes for the damaged upper holes 13a and 14b, respectively.

The mat 200 is manufactured, from metal or polymer wires in such a manner to have a shape in the form of a net. An upper end portion of the mat 200 is rotatably combined with the upper frame 13, and a lower end portion thereof is moved forward or backward in a space inside of the seat frame 10 with the lower end portion thereof serving as a spindle.

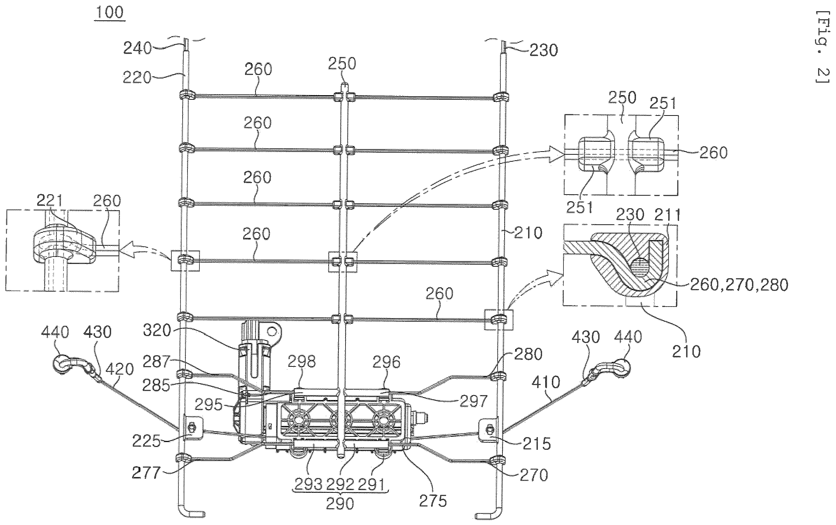

With reference to FIG. 2, the mat 200 includes a first vertical frame 210, a second vertical frame 220, a first vertical wire 230, a second vertical wire 240, a third vertical frame 250, a horizontal wire 260, a first support wire 270, a first connection wire 275, a second support wire 277, a third support wire 280, a second connection wire 285, a fourth support wire 287, a first mounting clip unit 290, and a second mounting clip unit 295.

A first end portion of the first vertical frame 210 is formed to a shape of a cylinder that extends upward or downward from a position adjacent to the first lateral-side frame 11. A second end portion thereof extends upward by a predetermined distance from the first end portion thereof to a position corresponding to a lower portion of the upper frame 13.

A first end portion of the second vertical frame 220 is formed to a shape of a cylinder that extends upward or downward from a position adjacent to the second lateral-side frame 12. A second end portion thereof extends upward in parallel with the first vertical frame 210 from the first end portion thereof to the position corresponding to the lower portion of the upper frame 13.

A first end portion of the first vertical wire 230 is formed to a shape of a cylinder that extends upward or downward and is inserted into a first end portion of the first vertical frame 210. A center portion thereof extends into a second end portion of the first vertical frame 210 to a second end of the first vertical frame 210.

A second end portion of the first vertical wire 230 extends from the second end portion of the first vertical frame 210 in a manner that is inclined upward toward a second lateral side thereof and passes through the upper hole 13a in the upper frame 13 in front. A second end portion of the first vertical wire 230 extends from behind the upper frame 13 by a predetermined distance to an upper portion of the auxiliary hole 15.

A first end portion of the second vertical wire 240 is formed to a shape of a cylinder that extends upward or downward and is inserted into a first end portion of the second vertical frame 220. A center portion thereof extends into a second end portion of the second vertical frame 220 to a second end of the second vertical frame 220.

A second end portion of the second vertical wire 240 extends from the second end portion of the second vertical frame 220 in a manner that is inclined upward toward a first lateral side thereof and passes through the upper hole 13b in the upper frame 13 in front. A second end portion of the second vertical wire 240 extends from behind the upper frame 13 by a predetermined distance to an upper portion of the auxiliary hole 16.

Therefore, when the respective first end portions of the first and second vertical wires 230 and 240 are moved forward by the drive unit 300 and the tension unit 400, the respective second ends of the first and second vertical wires 230 and 240 are moved downward behind the upper frame 13 and are brought into contact with the reinforced ribs 13c and 13d, respectively.

A first end portion of the third vertical frame 250 is formed to a shape of a cylinder that extends upward or downward between the first and second vertical frames 210 and 220. A second end portion thereof extends upward from the first end portion thereof to the horizontal line that is at a smaller height than the first and second vertical frames 210 and 220.

Horizontal frames 251 into which the horizontal wires 260 described below, respectively, are inserted are formed on the third vertical frame 250 in such a manner as to be equally spaced apart along an extension direction of the third vertical frame 250.

The horizontal frames 251 are connected to internal spaces, respectively, of the third vertical frame 250. The horizontal frames 251 are formed to a shape of a cylinder that protrudes from first and second lateral sides, respectively, of the third vertical frame 250 toward the first and second lateral sides, respectively, of the third vertical frame 250.

A first end portion of the horizontal wire 260 is formed to a shape of a semi-circular hook that protrudes forward. The first end portion thereof is brought into contact with a second lateral side, a front side, and a first lateral side of the first vertical wire 230 and is combined with the first vertical wire 230 through a sealing member 211 formed on the first vertical frame 210.

Each of the sealing members 211 is formed on the same horizontal line as each of the horizontal frames 251. Each of the sealing members 211 expands in the shape of a ring to surround an external surface of the first vertical frame 210 and thus seals the first end portion of the horizontal wire 260 and one portion of the first vertical wire 230.

A first end portion of the sealing member 211 is formed in the shape of a hexahedron in such a manner as to seal the first end portion of the horizontal wire 260 and one portion of the first vertical wire 230. One part of a first lateral surface of the first end portion extends backward toward a second lateral side thereof in a manner that is tapered, and thus forms a second end portion of the sealing member 211. The second end portion thereof seals one part of a central portion of the horizontal wire 260.

Therefore, in a case where an occupant's weight is applied to the horizontal wire 260, the first end portion of the horizontal wire 260 may be rotated about the first vertical wire 230, and the center portion of the horizontal wire 260 that is adjacent to the first end portion of the horizontal wire 260 may be moved backward. The sealing member 211 effectively prevents a decrease in combining force between the horizontal wire 260 and the first vertical wire 230 that occurs due to this phenomenon.

The center portion of the horizontal wire 260 extends in the shape of a wire from a first end portion thereof toward a second lateral side thereof, passes through the horizontal frames 251 and the third vertical frame 250, and then extends to a position adjacent to the second vertical frame 220.

A second end portion of the horizontal wire 260 is formed to a shape of a semi-circular hook that protrudes forward. The second end portion thereof is brought into contact with a first lateral side, a front side, and a second lateral side of the second vertical wire 240 and is combined with the second vertical wire 240 through a sealing member 221 formed on the second vertical frame 220.

Each of the sealing members 221 is formed on the same horizontal line as each of the horizontal frames 251. Each of the sealing members 221 expands outward in the shape of a ring to surround an external surface of the second vertical frame 220 and thus seals the second end portion of the horizontal wire 260 and one portion of the second vertical wire 240.

A first end portion of the sealing member 221 is formed in the shape of a hexahedron in such a manner as to seal the second end portion of the horizontal wire 260 and one portion of the second vertical wire 240. One part of a first lateral surface of the first end portion extends backward toward a first lateral side thereof in a manner that is tapered, and thus forms a second end portion of the sealing member 221. The second end portion thereof seals one part of a central portion of the horizontal wire 260.

Therefore, in a case where the occupant's weight is applied to the horizontal wire 260, the second end portion of the horizontal wire 260 may be rotated about the second vertical wire 240, and the center portion of the horizontal wire 260 that is adjacent to the second end portion of the horizontal wire 260 may be moved backward. The sealing member 221 effectively prevents a decrease in combining force between the horizontal wire 260 and the second vertical wire 240 that occurs due to this phenomenon.

The horizontal wires 260 are combined with the first vertical wire 230, the third vertical frame 250, and the second vertical wire 240 on different horizontal lines using the same combination structure. The number of horizontal wires 260 may be decreased or increased according to respective lengths of upper and lower portions of the seat frame 10.

The sealing members 211 are formed to be equally spaced apart along an extension direction of the first vertical frame 210 and are combined with the horizontal wires 260. The sealing members 221 are formed to be equally spaced apart along an extension direction of the second vertical frame 220 and are combined with the horizontal wires 260.

A first end portion of the first support wire 270 is formed to a shape of a semi-circular hook that protrudes forward. The first end portion thereof is brought into contact with the second lateral side, the front side, and the first lateral side of the first vertical wire 230 and is combined with the first vertical wire 230 through the sealing member 211 formed on the first vertical frame 210.

A center portion of the first support wire 270 extends by a predetermined distance from a first end portion thereof toward a second lateral side thereof. A second end portion of the first support wire 270 extends from the center portion thereof in a manner that is inclined upward toward the second lateral side thereof and is connected to a first end portion of the first connection wire 275.

The first end portion of the first connection wire 275 is formed in the shape of a wire and is connected to the second end portion of the first support wire 270. A center portion of the first connection wire 275 passes through the first mounting clip unit 290 and extends toward a second lateral side thereof. A second end portion of the first connection wire 275 is connected to a second end portion of the second support wire 277.

A first end portion of the second support wire 277 is formed to a shape of a semi-circular hook that protrudes forward. The first end portion thereof is brought into contact with the first lateral side, the front side, and the second lateral side of the second vertical wire 240 and is combined with the second vertical wire 240 through the sealing member 221 formed on the second vertical frame 220.

A center portion of the second support wire 277 extends by a predetermined distance from a first end portion thereof toward a first lateral side thereof. A second end portion of the second support wire 277 extends from the center portion thereof in a manner that is inclined upward toward the first lateral side thereof and is connected to a second end portion of the first connection wire 275.

A first end portion of the third support wire 280 is formed to a shape of a semi-circular hook that protrudes forward from an upper portion of the first support wire 270. The first end portion thereof is brought into contact with the second lateral side, the front side, and the first lateral side of the first vertical wire 230, and is combined with the first vertical wire 230 through the sealing member 211 formed on the first vertical frame 210.

A center portion of the third support wire 280 extends by a predetermined distance from a first end portion thereof toward a second lateral side thereof. A second end portion of the third support wire 280 extends from the center portion thereof in a manner that is inclined downward toward the second lateral side thereof and is connected to a first end portion of the second connection wire 285.

The first end portion of the second connection wire 285 is formed in the shape of a wire and is connected to the second end portion of the third support wire 280. A center portion of the second connection wire 285 passes through the second mounting clip unit 295 and extends toward a second lateral side thereof. A second end portion of the second connection wire 285 is connected to a second end portion of the fourth support wire 287.

A first end portion of the fourth support wire 287 is formed to a shape of a semi-circular hook that protrudes forward. The first end portion thereof is brought into contact with the first lateral side, the front side, and the second lateral side of the second vertical wire 240 and is combined with the second vertical wire 240 through the sealing member 221 formed on the second vertical frame 220.

A center portion of the fourth support wire 287 extends by a predetermined distance from a first end portion thereof toward a first lateral side thereof. A second end portion of the fourth support wire 287 extends from the center portion thereof in a manner that is inclined upward toward the first lateral side thereof and is connected to a second end portion of the second connection wire 285.

Therefore, the first and second support wires 270 and 277 are connected to each other through the first connection wire 275 and thus are formed in a stepwise manner. The first and second support wires 270 and 277 stably support a lower portion of the drive unit 300 connected to the first mounting clip unit 290 and prevent the first and second support wires 270 and 277 from being deformed due to a weight of the drive unit 300.

In addition, the third and fourth support wires 280 and 287 are connected to each other through the second connection wire 285 and thus are formed in a stepwise manner. The third and fourth support wires 280 and 287 stably support an upper portion of the drive unit 300 connected to the second mounting clip unit 295 and prevents the third and fourth support wires 280 and 287 from being deformed due to the weight of the drive unit 300.

The first mounting clip unit 290 includes a first mounting clip 291, a first connection member 292, and a first mounting clip 293.

A first end portion of the first mounting clip unit 290 is formed in such a manner that the first connection member 292 in a shape of a cylinder that extends toward a first lateral side thereof or a second lateral side thereof surrounds the first connection wire 275. A second end portion of the first mounting clip unit 290 is formed in such a manner that respective parts of opposite end portions of the first connection member 292 protrude backward and thus are combined with the drive unit 300 in a hooked manner.

A first end portion of the first connection member 292 is formed to a shape of a cylinder that extends toward a first lateral side thereof or a second lateral side thereof in such a manner that the first end portion of the first connection wire 275 is inserted into the first end portion of the first connection member 292. A second end portion of the first connection member 292 extends in the shape of a cylinder toward the second lateral side thereof in a state of being connected to the third vertical frame 250 and thus covers the second end portion of the first connection wire 275.

A first end portion of the first mounting clip 291 is formed to a shape of a rectangular plate whose upper and lower portions have a backward bent part, and is combined with a rear surface of the first end portion of the first connection member 292. A center section of a first end part of a center portion of the first mounting clip 291 extends forward in the shape of a stick. Hooking jaws, each with a hooking surface facing forward, are formed on a second end portion of the first mounting clip 291.

A first end portion of the first mounting clip 293 is formed to a shape of a rectangular plate whose upper and lower portions have a backward bent part, and is combined with a rear surface of the first end portion of the first connection member 292. A center section of a first end part of a center portion of the first mounting clip 293 extends forward in the shape of a stick. Hooking jaws, each with a hooking surface facing forward, are formed on a second end portion of the first mounting clip 293.

The second mounting clip unit 295 includes a second mounting clip 296, a second connection member 297, and a second mounting clip 298.

A first end portion of the second mounting clip unit 295 is formed in such a manner that the second connection member 297 in a shape of a cylinder that extends toward a first lateral side thereof or a second lateral side thereof surrounds the second connection wire 285. A second end portion of the second mounting clip unit 295 is formed in such a manner that respective parts of opposite end portions of the second connection member 297 protrude backward and thus are combined with the drive unit 300 in a hooked manner.

A first end portion of the second connection member 297 is formed to a shape of a cylinder that extends toward a first lateral side thereof or a second lateral side thereof in such a manner that the first end portion of the second connection wire 285 is inserted into the first end portion of the second connection member 297. A second end portion of the second connection member 297 extends in the shape of a cylinder toward the second lateral side thereof in a state of being connected to the third vertical frame 250 in such a manner as to intersect the third vertical frame 250, and thus covers the second end portion of the second connection wire 285.

A first end portion of the second mounting clip 296 is formed to a shape of a rectangular plate whose upper and lower portions have a backward bent part, and is combined with a rear surface of the first end portion of the second connection member 297. A center section of a first end part of a center portion of the second mounting clip 296 extends forward in the shape of a stick. Hooking jaws, on each of which a hooking surface facing forward is formed, are attached to an external side of a second end portion of the second mounting clip 296.

A first end portion of the second mounting clip 298 is formed to a shape of a rectangular plate whose upper and lower portions have a backward bent part, and is combined with a rear surface of a second end portion of the second connection member 297. A center section of a first end part of a center portion of the second mounting clip 298 extends forward in the shape of a stick. Hooking jaws, on each of which a hooking surface facing forward is formed, are attached to an external side of a second end portion of the second mounting clip connection member 298.

The first vertical frame 210, the second vertical frame 220, the third vertical frame 250, the sealing members 211 and 221, the horizontal frames 251, the first mounting clip unit 290, and the second mounting clip unit 295 are manufactured by injection molding in a state where the first vertical wire 230, the second vertical wire 240, the horizontal wire 260, the first support wire 270, the first connection wire 275, the second support wire 277, the third support wire 280, the second connection wire 285, and the fourth support wire 287 are connected to each other.

Therefore, this manufacturing method provides the advantage that the first vertical frame 210, the second vertical frame 220, the third vertical frame 250, the sealing members 211 and 221, the horizontal frames 251, the first mounting clip unit 290, and the second mounting clip unit 295 are easy to manufacture and that the durability of each of the first vertical wire 230, the second vertical wire 240, the horizontal wire 260, the first support wire 270, the first connection wire 275, the second support wire 277, the third support wire 280, the second connection wire 285, and the fourth support wire 287 are enhanced.

The first support wire 270, the first connection wire 275, and the second support wire 277 may be manufactured integrally into a product, and the third support wire 280, the second connection wire 285, and the fourth support wire 287 may be manufactured integrally into a product.

The drive unit 300 may be combined with the mat 200 through any one of the first or second mounting clip units 290 and 295.

In a case where the first support wire 270, the first connection wire 275, and the second support wire 277 are manufactured integrally into a product, the product may be used as a first trapezoid-shaped horizontal wire of which a center portion protrudes upward in the shape of a trapezoid.

In a case where the third support wire 280, the second connection wire 285, and the fourth support wire 287 are manufactured integrally into a product, the product may be used as a second trapezoid-shaped horizontal wire of which a center portion protrudes upward in the shape of a trapezoid.

Opposite end portions of each of the first and second trapezoid-shaped horizontal wires are formed in the same shape as the first end portion and the second end portion of the horizontal wire 260 and are combined with the first and second vertical wires 230 and 240 through the sealing members 211 and 221, respectively. The combination provides the advantage that an external impact force applied to the drive unit 300 is lessened.

Specifically, in a case where an external force is applied to the seat frame 10 and where the drive unit 300 is shaken, the first and second connection wires 275 and 285 may be moved forward or backward or be moved upward or downward. In this case, the sealing members 211 and 221 hold the first and second support wires 270 and 277, respectively, firmly in place. For this reason, the first and second support wires 270 and 277 are prevented from being rotated about the first and second vertical wires 230 and 240, respectively, or from being moved upward and backward along the first and second vertical wires 230 and 240.

The drive unit 300 includes a base frame 310, an actuator 320, the lead screw 330, the first nut 340, a second nut 350, and a cover frame 360.

The drive unit 300 is combined with a center part of a lower rear portion of the mat 200 and is connected respective second end portions of first and second cables 410 and 420 of the tension unit 400. The drive unit 300 is configured to pull the first and second cables 410 and 420 or to release the first and second cables 410 and 420 toward a first lateral side thereof or a second lateral side thereof.

Specifically, the base frame 310 is formed in the shape of a rectangular frame and is combined, in a hooked manner, with the first mounting clips 291 and 293 and the second mounting clips 296 and 298 that pass through the base frame 310 and the cover frame 360 behind the mat 200.

The actuator 320 is configured in such a manner as to have a shape of a cylinder that extends upward or downward. The actuator 320 is connected to a second lateral side of the base frame 310 and is connected in a gear-tooth manner to the lead screw 330 that is rotated behind the base frame 310.

A first end portion of the lead screw 330 is connected in a gear-tooth manner to the actuator 320 behind the base frame 310 in such a manner as to be rotated about a shaft extending toward a first lateral side thereof or a second lateral side thereof, and a second end potion thereof extends toward the first lateral side thereof.

A first threaded portion is formed on an external surface of a first end portion of the lead screw 330. The first threaded portion spirally extends along an external surface of the lead screw 330, rotating in a positive direction from a second lateral side thereof to a first lateral side thereof.

A second threaded portion is formed on an external surface of a second end portion of the lead screw 330. The second threaded portion spirally extends along the external surface of the lead screw 330, rotating in a reverse direction from the center of the lead screw 330 toward the first lateral side thereof.

The first nut 340 is combined in a nut and bolt fashion with the second threaded portion formed on the external surface of the second end portion of the lead screw 330. The second nut 350 is combined in a nut and bolt fashion with the first threaded portion formed on the external surface of the first end portion of the lead screw 330.

Therefore, when the lead screw 330 is rotated in the reverse direction by the actuator 320, the second nut 350 is moved in a slid manner toward a first lateral side thereof in a state of being in contact with the base frame 310 and the cover frame 360, and the first nut 340 is moved in a slid manner toward a second lateral side thereof in a state of being in contact with the base frame 310 and the cover frame 360.

In addition, when the lead screw 330 is rotated in the positive direction by the actuator 320, the second nut 350 is moved in a slid manner toward the second lateral side in a state of being in contact with the base frame 310 and the cover frame 360, and the first nut 340 is moved in a slid manner toward the first lateral side thereof in a state of being in contact with the base frame 310 and the cover frame 360.

The cover frame 360 is combined with the base frame 310 through the first mounting clips 291 and 293 and the second mounting clips 296 and 298 and thus is brought into contact with rear surfaces of the first and second nuts 340 and 350.

The tension unit 400 includes a first cable 410, a second cable 420, connection hooks 430, multi-step hooks 440, and cable clips 450.

The tension unit 400 is formed by cables combined with the first lateral-side frame 11 and the second lateral-side frame 12, respectively, extending toward the drive unit 300 and being connected to nuts within the drive unit 300. When the drive unit 300 drives, the cables are moved into the drive unit 300 or are released outward, and thus move a lower portion of the mat 200 forward or backward.

Specifically, a first end portion of the first cable 410 is combined with a front portion of the first lateral-side frame 11 through the connection hook 430 and the multi-step 440. A center portion thereof extends backward toward a second lateral side thereof, and then is combined with a combination plate 215 formed inside of the first vertical frame 210 through the cable clip 450.

A second end portion of the first cable 410 extends by a predetermined distance from the center portion thereof toward the second lateral side thereof, is inserted between the base frame 310 and the cover frame 360, and is combined with a lower portion of the first nut 340.

A first end portion of the second cable 420 is combined with a front portion of the second lateral-side frame 12 through the connection hook 430 and the multi-step 440. A center portion thereof extends in a manner that is inclined backward toward a first lateral side thereof, and then is combined with a combination plate 225 formed inside of the second vertical frame 220 through the cable clip 450.

A second end portion of the second cable 420 extends by a predetermined distance from the center portion thereof toward the first lateral side thereof, is inserted between the base frame 310 and the cover frame 360, and is combined with a lower portion of the second nut 350.

With reference to FIG. 1, a first end portion of the connection hook 430 is formed in the shape of a cylinder. A first end portion of the first or second cable 410 or 420 is inserted into the first end portion thereof. A second end portion of the connection hook 430 extends in the shape of a hook toward a first or second lateral side thereof and is inserted into the multi-step 440.

An operator inserts the first end portion of the first or second cable 410 or 420 into the first end portion of the connection hook 430, presses the first end portion of the connection hook 430, and thus combines the first or second cable 410 or 420 with the connection hook 430.

It is possible that the connection hook 430 is manufactured of a metal, a polymer, or a composite material. When deformed by pressing, the connection hook 430 is firmly combined with the first or second cable 410 or 420.

A first end portion of the multi-step 440 is formed to a shape of a cylinder that surrounds the first end portion of the connection hook 430. A center portion thereof extends in a bent state toward the first lateral-side frame 11 or a front portion of the second lateral-side frame 12 between the first lateral-side frame 11 or the second lateral-side frame 12 and the connection hook 430.

A second end portion of the multi-step 440 extends from a center portion thereof backward in a shape of a cylinder that passes through a front surface of the first lateral-side frame 11 or the second lateral-side frame 12. Hooking protrusions 445 are formed on an external surface of a second end portion of the multi-step 440 in such a manner as to be positioned the same distance away from each other from heading forward to heading backward. The hooking protrusions 445 are combined in a hooked manner with the first lateral-side frame 11 or the second lateral-side frame 12.

The hooking protrusions 445, each with the shape of a semi-circle, surround first and second lateral surfaces of the second end portion of the multi-step 440. Hooking protrusion units of the hooking protrusions 445 surrounding the first and second lateral surfaces of the second end portion of the multi-step 440 are formed in such a manner as to be equally spaced apart in a backward direction along an external surface of the second end portion of the multi-hook 440.

The second end portion of the multi-step 440 is combined in a hooked manner with the first lateral-side frame 11 or the second lateral-side frame 12 in a state where a second end portion of the connection hook 430 is inserted into the second end portion of the multi-step 440, and the hooking protrusion units are arranged behind the first lateral-side frame 11 or the second lateral-side frame 12. For this reason, the connection hook 430 and the multi-step 440 are held firmly in place on the first lateral-side frame 11 or the second lateral-side frame 12.

Therefore, when the actuator 320 drives and thus the first and second nuts 340 and 350 are moved toward each other, the first and second cables 410 and 420 are pulled, and due to tension forces of the first and second cables 410 and 420, the lower portion of the mat 200 is moved forward.

Conversely, when the actuator 320 drives and thus the first and second nuts 340 and 350 are moved away from each other, the first and second cables 410 and 420 are released toward a first lateral side thereof and a second lateral side thereof, and due to release of the tension forces of the first and second cables 410 and 420, the lower portion of the mat 200 is moved backward.

In addition, the mat 200 is manufactured to a shape of a net, and thus the mat 200 has a small weight. This manufacturing method provides the advantage that a weight of a seat itself can be effectively reduced and that it is possible to manufacture the mat 200 by injection molding in a short space of time.

### Description of the Reference Numerals in the Drawings

- 100:: lumbar support assembly
- 200:: mat 300: drive unit
- 400:: tension unit

## Claims

1. A lumbar support assembly (100) comprising:
a mat (200) formed by connecting wires (230, 240, 260) in such a manner as to take shape in the form of a net and connected to a seat frame (10) in such a manner as to be rotatable forward or backward;
a tension unit (400) comprising first and second cables (410, 420), respective first end portions of the first and second cable (410, 420) being connected to opposite sides, respectively, of the seat frame (10), and respective second end portions thereof extending to the mat (200);
a drive unit (300) mounted on a center lower portion of the mat (200) and connected to the respective second end portions of the first and second end portions, the drive unit (300) being configured to pull or release the first and second cables (410, 420); and
a mounting clip unit (290, 295), a first end portion of the mounting clip unit (290, 295) being formed to a shape of a cylinder that extends toward opposite lateral sides and being combined with the mat (200), and a second end portion thereof being formed in such a manner that opposite end parts of the first end portion protrude backward and are combined in a hooked manner with the drive unit (300).

2. The lumbar support assembly (100) of claim 1, wherein the mat (200) comprising:
vertical frames (210, 220, 250) spaced apart from a first lateral side to a second lateral side;
vertical wires (230, 240) inserted into the vertical frames (210, 220, 250), respectively; and
horizontal wires (260), each intersecting the vertical frames (210, 220, 250) and combined with the vertical wires (230, 240).

3. The lumbar support assembly (100) of claim 2, wherein first lateral side and second lateral side portions of each of the horizontal wires (260) are formed in such a manner to be bent in the shape of a hook and to be inserted into the vertical frames (210, 220, 250) while surrounding the vertical wires (230, 240).

4. The lumbar support assembly (100) of claim 1, wherein the tension unit (400) comprises:
a connection hook (430), a first end portion of the connection hook (430) being pressed in a state where the respective first end portions of the first and second cables (410, 420) are inserted in the first end portion and being combined with the first and second cables (410, 420), and a second end portion thereof extending in the shape of a hook; and
a multi-step hook (440) combined in a hooked manner with the seat frame (10), and configured to allow the second end portion of the connection hook (430) to be inserted into the multi-step hook (440), with a plurality of hooking protrusions (445) being provided on an external surface of the multi-step hook (440) in such a manner as to be spaced apart along an extension direction thereof.

## Patentansprüche

1. Eine Lordosenstützanordnung (100), die folgende Merkmale aufweist:
eine Matte (200), die gebildet ist durch Verbinden von Drähten (230, 240, 260) in derartiger Weise, dass sie die Form eines Netzes annehmen, und die mit einem Sitzrahmen (10) auf derartige Weise verbunden ist, dass sie nach vorne oder hinten drehbar ist;
eine Spanneinheit (400) mit einem ersten und einem zweiten Kabel (410, 420), wobei erste Endabschnitte des ersten bzw. zweiten Kabels (410, 420) mit gegenüberliegenden Seiten des Sitzrahmens (10) verbunden sind und sich jeweilige zweite Endabschnitte derselben zu der Matte (200) erstrecken;
eine Antriebseinheit (300), die an einem mittleren unteren Abschnitt der Matte (200) angebracht und mit den jeweiligen zweiten Endabschnitten der ersten und zweiten Endabschnitte verbunden ist, wobei die Antriebseinheit (300) dazu ausgebildet ist, an dem ersten und zweiten Kabel (410, 420) zu ziehen oder diese zu lösen; und
eine Anbringklemmeinheit (290, 295), wobei ein erster Endabschnitt der Anbringklemmeinheit (290, 295) in eine Form eines Zylinders gebildet ist, der sich in Richtung gegenüberliegender lateraler Seiten erstreckt, und mit der Matte (200) kombiniert ist, und ein zweiter Endabschnitt derselben in derartiger Weise gebildet ist, dass gegenüberliegende Endteile des ersten Endabschnitts nach hinten vorstehen und in einer hakenförmigen Weise mit der Antriebseinheit (300) kombiniert sind.

2. Die Lordosenstützanordnung (100) gemäß Anspruch 1, bei der die Matte (200) folgende Merkmale aufweist:
vertikale Rahmen (210, 220, 250), die von einer ersten lateralen Seite zu einer zweiten lateralen Seite beabstandet sind;
vertikale Drähte (230, 240), die in die jeweiligen vertikalen Rahmen (210, 220, 250) eingeführt sind; und
horizontale Drähte (260), die jeweils die vertikalen Rahmen (210, 220, 250) schneiden und mit den vertikalen Drähten (230, 240) kombiniert sind.

3. Die Lordosenstützanordnung (100) gemäß Anspruch 2, bei der Abschnitte der ersten lateralen Seite und zweiten lateralen Seite jedes der horizontalen Drähte (260) auf derartige Weise gebildet sind, dass sie in der Form eines Hakens gebogen sind und in die vertikalen Rahmen (210, 220, 250) eingeführt sind, während sie die vertikalen Drähte (230, 240) umgeben.

4. Die Lordosenstützanordnung (100) gemäß Anspruch 1, bei der die Spanneinheit (400) folgende Merkmale aufweist:
einen Verbindungshaken (430), wobei ein erster Endabschnitt des Verbindungshakens (430) in einem Zustand gepresst wird, in dem die jeweiligen ersten Endabschnitt des ersten und des zweiten Kabels (410, 420) in den ersten Endabschnitt eingeführt sind, und mit dem ersten und mit dem zweiten Kabel (410, 420) kombiniert ist und ein zweiter Endabschnitt desselben sich in der Form eines Hakens erstreckt; und
einen mehrstufigen Haken (440), der in einer hakenförmigen Weise mit dem Sitzrahmen (10) kombiniert und dazu ausgebildet ist, zu ermöglichen, dass der zweite Endabschnitt des Verbindungshakens (430) in den mehrstufigen Haken (440) eingeführt wird, wobei eine Mehrzahl von Hakenvorsprüngen (445) an einer Außenoberfläche des mehrstufigen Hakens (440) auf derartige Weise vorgesehen ist, dass diese entlang einer Erstreckungsrichtung derselben beabstandet sind.

## Revendications

1. Ensemble de support lombaire (100) comprenant:
un tapis (200) formé par des fils de connexion (230, 240, 260) de manière à prendre la forme d'un filet et connecté à un cadre de siège (10) de manière à pouvoir tourner vers l'avant ou vers l'arrière;
une unité de tension (400) comprenant un premier et un deuxième câble (410, 420), les premières parties d'extrémité respectives du premier et du deuxième câble (410, 420) étant connectées respectivement à des côtés opposés du cadre de siège (10), et les deuxièmes parties d'extrémité respectives de ce dernier s'étendant vers le tapis (200);
une unité d'entraînement (300) montée sur une partie inférieure centrale du tapis (200) et connectée aux deuxièmes parties d'extrémité respectives des première et deuxième parties d'extrémité, l'unité d'entraînement (300) étant configurée pour tirer ou libérer les premier et deuxième câbles (410, 420); et
une unité de clip de montage (290, 295), une première partie d'extrémité de l'unité de clip de montage (290, 295) étant formée sous forme d'un cylindre qui s'étend vers les côtés latéraux opposés et étant combinée avec le tapis (200), et une deuxième partie d'extrémité de cette dernière étant formée de manière que les parties d'extrémité opposées de la première partie d'extrémité ressortent vers l'arrière et soient combinées de manière accrochée avec l'unité d'entraînement (300).

2. Ensemble de support lombaire (100) selon la revendication 1, dans lequel le tapis (200) comprend:
des cadres verticaux (210, 220, 250) distants d'un premier côté latéral à un deuxième côté latéral;
des fils verticaux (230, 240) insérés respectivement dans les cadres verticaux (210, 220, 250); et
des fils horizontaux (260) venant, chacun, en intersection avec les cadres verticaux (210, 220, 250) et combinés avec les fils verticaux (230, 240).

3. Ensemble de support lombaire (100) selon la revendication 2, dans lequel les première et deuxième parties latérales de chacun des fils horizontaux (260) sont formées de manière à être recourbées en forme de crochet et à être insérées dans les cadres verticaux (210, 220, 250) tout en entourant les fils verticaux (230, 240).

4. Ensemble de support lombaire (100) selon la revendication 1, dans lequel l'unité de tension (400) comprend:
un crochet de connexion (430), une première partie d'extrémité du crochet de connexion (430) étant pressée dans un état dans lequel les premières parties d'extrémité respectives des premier et deuxième câbles (410, 420) sont insérées dans la première partie d'extrémité et étant combinées avec les premier et deuxième câbles (410, 420), et une deuxième partie d'extrémité de ces derniers s'étendant sous forme d'un crochet; et
un crochet à étages multiples (440) combiné de manière accrochée avec le cadre de siège (10), et configuré pour permettre que la deuxième partie d'extrémité du crochet de connexion (430) soit insérée dans le crochet à étages multiples (440), avec une pluralité de saillies d'accrochage (445) qui sont prévues sur une surface externe du crochet à plusieurs étages (440) de manière à être distantes l'une de l'autre dans une direction d'extension de ce dernier.
